(19) Europäisches Patentamt
European Patent Office
Office européen des brevets

(11) **EP 4 319 422 A1**

(12) **EUROPEAN PATENT APPLICATION**
published in accordance with Art. 153(4) EPC

(43) Date of publication:
**07.02.2024  Bulletin 2024/06**

(21) Application number: **21933889.4**

(22) Date of filing: **31.03.2021**

(51) International Patent Classification (IPC):
**H04W 72/12** (2023.01)

(52) Cooperative Patent Classification (CPC):
**H04W 72/12**

(86) International application number:
**PCT/CN2021/084754**

(87) International publication number:
**WO 2022/205229 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **LIU, Yang
Beijing 100085 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **COMMUNICATION METHOD AND DEVICE USED FOR PUSCH, AND STORAGE MEDIUM**

(57)    The present disclosure relates to a communication method and device used for a PUSCH, and a storage medium. In the communication method used for a PUSCH, a network device sends first indication information, the first indication information being used to indicate a PUSCH transmission mode associated with a transmission and reception point (TRP), and the PUSCH transmission mode associated with the TRP comprising a terminal independently sending a PUSCH to a single TRP or cooperatively sending a PUSCH to a plurality of TRPs. The terminal receives the first indication information, the first indication information being used to indicate the PUSCH transmission mode associated with the TRP, and the PUSCH transmission mode associated with the TRP comprising the terminal independently sending a PUSCH to a single TRP or cooperatively sending a PUSCH to a plurality of TRPs. According to the first indication information, a PUSCH is independently sent to a single TRP or a PUSCH is cooperatively sent to a plurality of TRPs. By means of the present disclosure, dynamic switching between a single TRP and multiple TRP can be achieved.

sending first indication information, in which, the first indication information is configured to indicate a PUSCH transmission mode associated with a TRP, and the PUSCH transmission mode associated with the TRP includes terminal independently sending the PUSCH to a single TRP or cooperatively sending the PUSCH to multiple TRPs

S11

**FIG. 2**

**Description**

<u>**TECHNICAL FIELD**</u>

The present disclosure relates to a field of communication technology, and particularly to, a communication method and apparatus for a physical uplink shared channel (PUSCH), and a storage medium.

<u>**BACKGROUND**</u>

With development of the communication technology, in order to ensure coverage, it is required to use beam-based transmission and reception. When a network device (such as, a base station) has multiple transmission reception points (TRPs), multiple TRPs/multiple panels (Multi-TRP/PANEL) may be used to provide services for a terminal. An application of the Multi-TRP/PANEL of the network device is mainly to improve the coverage at a cell edge, to provide more balanced service quality in a service area, and to cooperatively transmit data among the Multi-TRP/PANEL in different ways. From perspective of a network morphology, deploying the network with a large number of distributed access points and baseband centralized processing is more conducive to providing a balanced user-perceived rate and significantly reducing latency and signaling overhead caused by handover. By utilizing the cooperation among the Multi-TRP/PANEL, channel transmission/reception can be performed based on a plurality of beams of a plurality of angles, so that various occlusion/blocking effects can be better overcome, robustness of a link connection is guaranteed, and it is suitable for ultra-reliable low-latency communication (URLLC) services to improve transmission quality and meet reliability requirements.

In a research stage of R16, a transmission enhancement is performed on a physical downlink shared channel (PDSCH) based on an application of a downlink multi-point cooperative transmission technology among Multi-TRP/PANEL. Since data transmission includes scheduling feedback of uplink and downlink channels, only enhancement for a downlink data channel cannot ensure service performance in the research of URLLC. Therefore, in the research of R17, enhancement is further performed on a physical downlink control channel (PDCCH) and a physical uplink control channel (PUCCH) and a physical uplink shared channel (PUSCH).

Based on a PUSCH enhancement of Multi-TRP, a main solution of sending the PUSCH controlled based on a single downlink control information (DCI) signaling is realized by using two independent sounding reference signal resource indicator (SRI) fields to respectively correspond to SRIs for different TRPs in DCI 0_1/0_2, to control the sending of the PUSCH to the different TRPs. For a PUSCH transmission enhancement of Multi-TRP based on the single DCI, similar to a downlink PDSCH, dynamic switching between the single TRP and the multi-TRP needs to be supported, so as to better adapt to transmission scenarios and actual channel conditions.

However, for the enhanced PUSCH transmission of Multi-TRP, how to dynamically switch between the single TRP and the multi-TRP and how to support flexible indication of the TRP to which the PUSCH is sent are problems to be solved.

<u>**SUMMARY**</u>

To overcome problems existing in related art, a communication method and apparatus for a physical uplink shared channel (PUSCH), and a storage medium are provided in the present disclosure.

According to a first aspect of embodiments of the disclosure, a communication method for a PUSCH is provided. The method is applied to a network device, and includes:
sending first indication information, in which, the first indication information is configured to indicate a PUSCH transmission mode associated with a transmission reception point (TRP), and the PUSCH transmission mode associated with the TRP includes a terminal independently sending the PUSCH to a single TRP or cooperatively sending the PUSCH to multiple TRPs.

In an implementation, the first indication information is configured to indicate a correspondence between a transmission occasion for sending the PUSCH and a TRP direction to which the terminal is oriented.

In an implementation, the first indication information is carried on a DCI signaling, and is indicated by a sounding reference signal resource indicator (SRI) indication field in the DCI signaling.

In an implementation, the communication method further includes: the DCI signaling includes a plurality of SRI indication fields, and the SRI indication field includes a redefined reserved codepoint or a newly added reserved codepoint.

In an implementation, the DCI signaling includes a plurality of SRI indication fields, and codepoints corresponding to each SRI indication field include a codepoint indicating a valid SRI and a configured reserved codepoint;

in which, a sounding reference signal (SRS) resource set corresponding to an SRI of the reserved codepoint is in an inactivated state and the PUSCH is not sent in a direction to the TRP, in response to the SRI indication field indicating the SRI of the reserved codepoint;
the PUSCH to the TRP is sent in a direction of an SRS resource indicated in an SRS resource set corresponding to the codepoint of the valid SRI, in response to the SRI indication field indicating the codepoint of the valid SRI.

In an implementation, in response to non-codebook based transmission of the PUSCH, and the SRI indication field at least including a first SRI indication field and a second SRI indication field;

the first SRI indication field is configured to indicate an SRS resource combination for sending the PUSCH in a first SRS resource set corresponding to the PUSCH, and includes indication information of a number of layers sent to a first TRP direction of the PUSCH;
the second SRI indication field is configured to indicate an SRS resource combination for sending the PUSCH in a second SRS resource set corresponding to the PUSCH, and the second SRI indication field does not include the indication information of the number of layers sent to a TRP direction of sending the PUSCH.

In an implementation, a valid SRI codepoint set included in the second SRS resource set is a subset of a valid SRI codepoint set included in the first SRS resource set, includes a redefined and/or newly added codepoint, and is configured to indicate different PUSCH transmission states of cooperative TRPs.
In an implementation, in response to one or more SRS resource sets for sending the PUSCH to one or more cooperative TRPs including only one SRS resource, indication information of the SRI field is configured to indicate a PUSCH transmission state in a TRP direction corresponding to an SRS resource set.
In an implementation, the indication information of the SRI field is configured to jointly indicate activation states of a plurality of SRS resource sets; in which the different SRS resource sets correspond to different TRP directions.
In an implementation, the SRI indication field includes indication information configured to indicate to reorder mapping relationships between a plurality of cooperative TRPs to which the PUSCH is sent and SRI fields, in which a TRP transmission direction to which the terminal is oriented is associated with the corresponding SRS resource set.
In an implementation, wherein, in response to codebook-based transmission of the PUSCH, indication information of the PUSCH transmission states for different cooperative TRPs indicated by the SRI field corresponds to indication information of transmission precoding matrix indicator (TPMI) transmission states; in which the indication information of the PUSCH transmission states is configured to indicate transmission states of different TRPs corresponding to different TPMI indication fields.
According to a second aspect of the embodiments of the disclosure, a communication method for a PUSCH is provided. The method is applied to a terminal, and includes: receiving first indication information, in which the first indication information is configured to indicate a PUSCH transmission mode associated with a TRP, and the PUSCH transmission mode associated with the TRP includes a terminal independently sending the PUSCH to a single TRP or cooperatively sending the PUSCH to multiple TRPs; and independently sending the PUSCH to the single TRP or cooperatively sending the PUSCH to the multiple TRPs based on the first indication information.
In an implementation, the first indication information is configured to indicate a correspondence between a transmission occasion for sending the PUSCH and a TRP direction to which the terminal is oriented.
In an implementation, the first indication information is carried on a DCI signaling, and is indicated by an SRI indication field in the DCI signaling.
In an implementation, in response to the DCI signaling including a plurality of SRI indication fields, and a codepoint for indicating a reserved codepoint being not included in the SRI indication field, the SRI indication field includes a redefined reserved codepoint or a newly added reserved codepoint.
In an implementation, the DCI signaling includes a plurality of SRI indication fields, and codepoints corresponding to each SRI indication field include a codepoint indicating a valid SRI and a configured reserved codepoint;

in which an SRS resource set corresponding to an SRI of the reserved codepoint is in an inactivated state and the PUSCH is not sent in a direction to the TRP, in response to the SRI indication field indicating the SRI of the reserved codepoint;
the PUSCH to the TRP is sent in a direction of an SRS resource indicated in an SRS resource set corresponding to the codepoint of the valid SRI, in response to the SRI indication field indicating the codepoint of the valid SRI.

In an implementation, in response to non-codebook based transmission of the PUSCH, and the SRI indication field at least including a first SRI indication field and a second SRI indication field;

the first SRI indication field is configured to indicate an SRS resource combination for sending the PUSCH in a first SRS resource set corresponding to the PUSCH, and includes indication information of a number of layers sent to a first TRP direction of the PUSCH;

the second SRI indication field is configured to indicate an SRS resource combination for sending the PUSCH in a second SRS resource set corresponding to the PUSCH, and the second SRI indication field does not include the indication information of the number of layers sent of a TRP direction of sending the PUSCH.

In an implementation, a valid SRI codepoint set included in the second SRS resource set is a subset of a valid SRI codepoint set included in the first SRS resource set, includes a redefined and/or newly added codepoint, and is configured to indicate different PUSCH transmission states of cooperative TRPs.

In an implementation, in response to one or more SRS resource sets for sending the PUSCH to one or more cooperative TRPs including only one SRS resource, indication information of the SRI field is configured to indicate a PUSCH transmission state in a TRP direction corresponding to an SRS resource set.

In an implementation, the indication information of the SRI field is configured to jointly indicate activation states of a plurality of SRS resource sets; in which the different SRS resource sets correspond to different TRP directions.

In an implementation, the SRI indication field includes indication information configured to indicate to reorder mapping relationships between a plurality of cooperative TRPs to which the PUSCH is sent and SRI fields, in which a TRP transmission direction to which the terminal is oriented is associated with the corresponding SRS resource set.

In an implementation, in response to codebook-based transmission of the PUSCH, indication information of the PUSCH transmission states for different cooperative TRPs indicated by the SRI field corresponds to indication information of TPMI transmission states; in which the indication information of the PUSCH transmission states is configured to indicate transmission states of different TRPs corresponding to different TPMI indication fields.

According to a third aspect of the embodiments of the disclosure, a communication apparatus for a PUSCH is provided. The apparatus includes:

a sending unit, configured to send first indication information, in which the first indication information is configured to indicate a PUSCH transmission mode associated with a TRP, and the PUSCH transmission mode associated with the TRP includes a terminal independently sending the PUSCH to a single TRP or cooperatively sending the PUSCH to multiple TRPs.

In an implementation, the first indication information is configured to indicate a correspondence between a transmission occasion for sending the PUSCH and a TRP direction to which the terminal is oriented.

In an implementation, the first indication information is carried on a DCI signaling, and is indicated by an SRI indication field in the DCI signaling.

In an implementation, in response to the DCI signaling including a plurality of SRI indication fields, and a codepoint for indicating a reserved codepoint being not included in the SRI indication field, the SRI indication field includes a redefined reserved codepoint or a newly added reserved codepoint.

In an implementation, the DCI signaling includes a plurality of SRI indication fields, and codepoints corresponding to each SRI indication field include a codepoint indicating a valid SRI and a configured reserved codepoint.

in which an SRS resource set corresponding to an SRI of the reserved codepoint is in an inactivated state and the PUSCH is not sent in a direction to the TRP, in response to the SRI indication field indicating the SRI of the reserved codepoint;
the PUSCH to the TRP is sent in a direction of an SRS resource indicated in an SRS resource set corresponding to the codepoint of the valid SRI, in response to the SRI indication field indicating the codepoint of the valid SRI.

In an implementation, in response to non-codebook based transmission of the PUSCH, and the SRI indication field at least including a first SRI indication field and a second SRI indication field;

the first SRI indication field is configured to indicate an SRS resource combination for sending the PUSCH in a first SRS resource set corresponding to the PUSCH, and includes indication information of a number of layers sent to a first TRP direction of the PUSCH;
the second SRI indication field is configured to indicate the SRS resource combination for sending the PUSCH in a second SRS resource set corresponding to the PUSCH, and the second SRI indication field does not include the indication information of the number of layers sent to a TRP direction of sending the PUSCH.

In an implementation, a valid SRI codepoint set included in the second SRS resource set is a subset of a valid SRI codepoint set included in the first SRS resource set, includes a redefined and/or newly added codepoint, and is configured to indicate different PUSCH transmission states of cooperative TRPs.

In an implementation, in response to one or more SRS resource sets for sending the PUSCH to one or more cooperative TRPs including only one SRS resource, indication information of the SRI field is configured to indicate a PUSCH transmission state in a TRP direction corresponding to an SRS resource set.

In an implementation, the indication information of the SRI field is configured to jointly indicate activation states of a plurality of SRS resource sets; in which different SRS resource sets correspond to different TRP directions.

In an implementation, the SRI indication field includes indication information configured to indicate to reorder mapping relationships between a plurality of cooperative TRPs to which the PUSCH is sent and SRI fields, in which a TRP transmission direction to which the terminal is oriented is associated with the corresponding SRS resource set.

In an implementation, in response to codebook-based transmission of the PUSCH, indication information of PUSCH transmission states for different cooperative TRPs indicated by the SRI field corresponds to indication information of TPMI transmission states; in which the indication information of the PUSCH transmission states is configured to indicate the transmission states of different TRPs corresponding to different TPMI indication fields.

According to a fourth aspect of the embodiment of the disclosure, a communication apparatus for a PUSCH is provided. The apparatus includes:

a receiving unit, configured to receive first indication information, in which the first indication information is configured to indicate a PUSCH transmission mode associated with a TRP, and the PUSCH transmission mode associated with the TRP includes a terminal independently sending the PUSCH to a single TRP or cooperatively sending the PUSCH to multiple TRPs;

a sending unit, configured to independently send the PUSCH to the single TRP or cooperatively send the PUSCH to the multiple TRPs based on the first indication information.

In an implementation, the first indication information is configured to indicate a correspondence between a transmission occasion for sending the PUSCH and a TRP direction to which the terminal is oriented.

In an implementation, the first indication information is carried on a DCI signaling, and is indicated by an SRI indication field in the DCI signaling.

In an implementation, in response to the DCI signaling including a plurality of SRI indication fields and a codepoint for indicating a reserved codepoint being not included in the SRI indication field, the SRI indication field includes a redefined reserved codepoint or a newly added reserved codepoint.

In an implementation, the DCI signaling includes a plurality of SRI indication fields, and codepoints corresponding to each SRI indication field include a codepoint indicating a valid SRI and a configured reserved codepoint;

in which an SRS resource set corresponding to an SRI of the reserved codepoint is in an inactivated state, and the PUSCH is not sent in a direction to the TRP, in response to the SRI indication field indicating the SRI of the reserved codepoint;

the PUSCH to the TRP is sent in a direction of an SRS resource indicated in an SRS resource set corresponding to the codepoint of the valid SRI, in response to the SRI indication field indicating the codepoint of the valid SRI.

In an implementation, in response to non-codebook based transmission of the PUSCH, and the SRI indication field at least including a first SRI indication field and a second SRI indication field;

the first SRI indication field is configured to indicate an SRS resource combination for sending the PUSCH in a first SRS resource set corresponding to the PUSCH, and includes indication information of a number of layers sent to a first TRP direction of the PUSCH;

the second SRI indication field is configured to indicate an SRS resource combination for sending the PUSCH in a second SRS resource set corresponding to the PUSCH, and the second SRI indication field does not include the indication information of the number of layers sent to a TRP direction of sending the PUSCH.

In an implementation, a valid SRI codepoint set included in the second SRS resource set is a subset of a valid SRI codepoint set included in the first SRS resource set, includes a redefined and/or newly added codepoint, and is configured to indicate different PUSCH transmission states of cooperative TRPs.

In an implementation, in response to one or more SRS resource sets for sending the PUSCH to one or more cooperative TRPs including only one SRS resource, indication information of the SRI field is configured to indicate a PUSCH transmission state in a TRP direction corresponding to an SRS resource set.

In an implementation, the indication information of the SRI field is configured to jointly indicate activation states of a plurality of SRS resource sets; in which different SRS resource sets correspond to different TRP directions.

In an implementation, the SRI indication field includes indication information configured to indicate to reorder mapping relationships between a plurality of cooperative TRPs to which the PUSCH is sent and SRI fields, in which a TRP transmission direction to which the terminal is oriented is associated with the corresponding SRS resource set.

In an implementation, in response to codebook-based transmission of the PUSCH, indication information of PUSCH transmission states for different cooperative TRPs indicated by the SRI field corresponds to indication information of TPMI transmission states; in which the indication information of the PUSCH transmission states is configured to indicate transmission states of different TRPs corresponding to different TPMI indication fields.

According to a fifth aspect of the embodiment of the disclosure, a communication apparatus for a PUSCH is provided. The apparatus includes: a processor; a memory configured to store instructions executable by the processor; in which,the processor is configured to execute the communication method for a PUSCH in the first aspect or in any one implementation of the first aspect.

According to a sixth aspect of the embodiments of the disclosure, a communication apparatus for a PUSCH is provided. The apparatus includes: a processor; a memory configured to store instructions executable by the processor; in which, the processor is configured to execute the communication method for a PUSCH in the second aspect or in any one implementation of the second aspect.

According to a seventh aspect of the embodiments of the disclosure, a storage medium is provided, instructions are stored in the storage medium, and when the instructions in the storage medium are executed by a processor of a network device, the network device is caused to execute the communication method for a PUSCH according to the first aspect or any one implementation of the first aspect.

According to an eighth aspect of the embodiments of the disclosure, a storage medium is provided, instructions are stored in the storage medium, and when the instructions in the storage medium are executed by a processor of a network device, the network device is caused to execute the communication method for a PUSCH according to the second aspect or any one implementation of the second aspect.

The technical solution provided in the embodiments of the disclosure may include following beneficial effects: a network device sends first indication information, in which the first indication information is configured to indicate a PUSCH transmission mode associated with a TRP, and the PUSCH transmission mode associated with the TRP includes a terminal independently sending a PUSCH to a single TRP or cooperatively sending a PUSCH to multiple TRPs. Accordingly, the terminal receives the first indication information, and can independently send the PUSCH to the single TRP or cooperatively send the PUSCH to the multiple TRPs based on the first indication information, so that dynamic switching indication for the multi-TRP and the single-TRP can be realized.

It should be understood that the above general descriptions and following detailed descriptions are only illustrative and descriptive, and may not be a limitation of the present disclosure.

## BRIEF DESCRIPTION OF THE DRAWINGS

The drawings herein are incorporated into the specification and constitute a part of the specification, embodiments in conformity with embodiments of the present disclosure are shown, and the principle of the present disclosure is explained together with the specification.

FIG. 1 is a schematic diagram illustrating a wireless communication system according to an example embodiment.
FIG. 2 is a flowchart illustrating a communication method for a physical uplink shared channel (PUSCH) according to an example embodiment.
FIG. 3 is a flowchart illustrating a communication method for a PUSCH according to an example embodiment.
FIG. 4 is a block diagram illustrating a communication apparatus for a PUSCH according to an example embodiment.
FIG. 5 is a block diagram illustrating a communication apparatus for a PUSCH according to an example embodiment.
FIG. 6 is a block diagram illustrating a communication apparatus for a PUSCH according to an example embodiment.
FIG. 7 is a block diagram illustrating a communication apparatus for a PUSCH according to an example embodiment.

## DETAILED DESCRIPTION

The example embodiments will be described in detail here, and examples thereof are shown in the accompanying drawings. When the following descriptions are referred to the accompanying drawings, unless otherwise indicated, the same numbers in different drawings represent the same or similar elements. The implementations described in the following example embodiments do not represent all implementations consistent with the present disclosure. Rather, they are merely examples of apparatuses and methods consistent with some aspects of the disclosure as detailed in the appended claims.

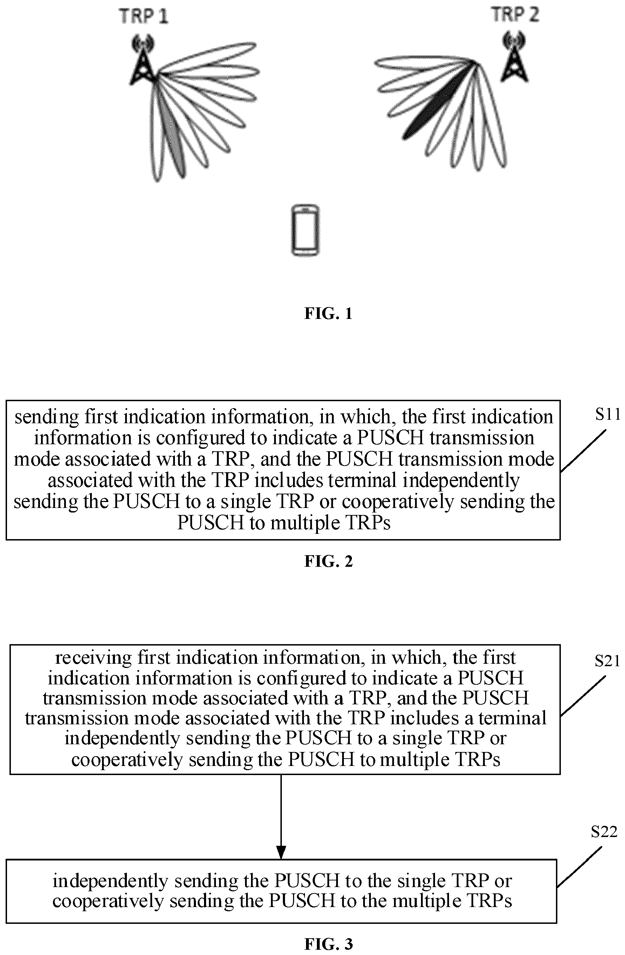

A communication method for a physical uplink shared channel (PUSCH) provided in embodiments of the disclosure may be applied to a wireless communication system shown in FIG. 1. As illustrated in FIG. 1, the wireless communication system includes a network device and a terminal. The terminal is connected to the network device through a radio resource, and performs data transmission. The data transmission is performed between the network device and the terminal based on a beam. An enhancement of PUSCH uplink transmission may be performed based on Multi-TRP between the network device and the terminal.

It may be understood that the number of transmission reception points (TRPs) for the network device to perform the data transmission with the terminal based on the Multi-TRP may be one or more. In the wireless communication system shown in FIG. 1, the network device performs the data transmission with the terminal based on TRP 1 and TRP 2, which is merely illustrative, but not restrictive.

It may be understood that the wireless communication system shown in FIG. 1 is merely illustrative, and the wireless communication system may further include other network devices, for example, may further include a core network device, a wireless relay device, a wireless backhaul device, and the like, which are not shown in FIG. 1. The number of the network devices and the number of the terminals included in the wireless communication system are not limited in the embodiments of the disclosure.

It can be further understood that the wireless communication system according to the embodiments of the disclosure is a network providing a wireless communication function. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), carrier sense multiple access with collision avoidance (CSMA/CA). Based on capacity, speed, time delay and other factors of the network, the network may be classified into a 2G (generation) network, a 3G network, a 4G network or a future evolution network, such as a 5G network, and the 5G network may also be called as a new radio (NR) network. For ease of description, the wireless communication network is simply referred to as a network sometimes in the disclosure.

Further, the network device involved in the disclosure may also be referred to as a wireless access network device. The wireless access network device may be a base station, an evolved node base station (evolved node B, eNB), a home base station, an access point (AP), a wireless relay node, a wireless backhaul node, a transmission point (TP) or a transmission and reception point (TRP) in a wireless fidelity (WIFI) system, etc. The base station may also be a gNB in the NR system. Alternatively, the base station may also be a component or part of a device that constitutes a base station. It should be understood that a specific technology and a specific device form adopted by the network device are not limited in the embodiments of the disclosure. In the disclosure, the network device may provide communication coverage for a specific geographic area, and may communicate with a terminal located in the coverage area (cell). In addition, when it is a vehicle to everything (V2X) communication system, the network device may also be a vehicle-mounted device.

Furthermore, the terminal involved in the disclosure may also be referred to as a terminal device, a user equipment (UE), a mobile station (MS), a mobile terminal (MT), etc., and is a device providing voice and/or data connectivity to a user. For example, the terminal may be a handheld device with a wireless connection function, a vehicle-mounted device, etc. At present, some examples of terminals are mobile phones, customer premise equipments (CPEs), pocket personal computers (PPCs), handheld computers, personal digital assistants (PDAs), laptops, tablets, wearable devices, or vehicle-mounted devices, etc. In addition, when it is the vehicle to everything (V2X) communication system, the terminal device may also be a vehicle-mounted device. It should be understood that a specific technology and a specific device form adopted by the terminal are not limited in the embodiments of the disclosure.

In the disclosure, data transmission is performed between the network device and the terminal based on a beam. An enhancement of PUSCH uplink transmission may be performed based on Multi-TRP between the network device and the terminal. Currently, sending of PUSCH is mainly controlled based on a single DCI. A main solution of sending the PUSCH controlled based on the single DCI is realized by using two independent SRI fields to respectively correspond to SRIs for different TRPs in DCIO_1/0_2, to control the sending of the PUSCH to the different TRPs.

In the related art, an uplink transmission solution of the PUSCH includes a codebook based uplink transmission and a non-codebook based uplink transmission.

In the NR system, the network device may configure at most one sounding reference signal (SRS) resource set to the terminal for the codebook based uplink transmission, which is implemented by configuring an SRS resource set as a codebook. When the network device schedules the PUSCH via DCI format 0_1, and the network device configures two SRS resources for the codebook based uplink transmission to the terminal, the terminal determines a precoding information and a number of transport streams of the PUSCH based on the SRI and a transmission precoding matrix indicator (TPMI)/transmission rank indicator (TRI), and maps the data stream to a port of the SRS resource indicated by the SRI through the determined precoding information. The SRI and TPMI/TRI are SRS resource indicator and Precoding information and number of layers in DCI, respectively. When the SRI exists, the SRI can only indicate one SRS resource of multiple SRS resources for the codebook based uplink transmission configured by the network device for the terminal. When the network device schedules the PUSCH via the DCI format 0_1, and the network device configures only one SRS resource for the codebook based uplink transmission to the terminal, there is no SRI.

The data in the uplink transmission of the terminal needs to be precoded by using a precoding matrix indicator (PMI) and a rank indication (RI) specified by the network side. And the precoded data is mapped to a corresponding antenna port based on a spatial filter (spatial relation info) corresponding to the SRS resource indicated by the SRI. The RI is also referred to as indication of a number of data layers sometimes, or indication of a number of transmission layers. Those skilled in the art should understand the consistency of meanings these terms.

A method for indicating multiple SRS resources by the SRI is provided in Table 1. A signaling indication method of the TPMI and RI for single-layer transmission and 4 antenna ports is provided in Table 2, which is indicated for different UE capabilities respectively. Here, the UE capabilities are classified into three types: fully coherent, partial coherent and non-coherent, which represent a coherent capability of the antenna port. Table 3 shows codewords for the single-layer transmission and 4 antenna ports.

Table 1

| Bit field mapped to index | SRI(s), $N_{SRS} = 2$ |
|---|---|
| 0 | 0 |
| 1 | 1 |

Table 2

| Bit field mapped to index | codebookSubset = fullyAndPartialAndNonCoherent | Bit field mapped to index | codebookSubset = partialAndNonCoherent | Bit field mapped to index | codebookSubset = noncoherent |
|---|---|---|---|---|---|
| 0 | 1 layer: TPMI=0 | 0 | 1 layer: TPMI=0 | 0 | 1 layer: TPMI=0 |
| 1 | 1 layer: TPMI=1 | 1 | 1 layer: TPMI=1 | 1 | 1 layer: TPMI=1 |
| ... | ... | ... | ... | ... | ... |
| 3 | 1 layer: TPMI=3 | 3 | 1 layer: TPMI=3 | 3 | 1 layer: TPMI=3 |
| 4 | 1 layer: TPMI=4 | 4 | 1 layer: TPMI=4 | | |
| ... | ... | ... | ... | | |
| 11 | 1 layer: TPMI=11 | 11 | 1 layer: TPMI= 11 | | |
| 12 | 1 layers: TPMI=12 | 12 - 15 | reserved | | |
| ... | ... | | | | |
| 27 | 1 layers: TPMI=27 | | | | |
| 28 - 31 | reserved | | | | |

Table 3

| TPMI index | W (ordered from left to right in increasing order of TPMI index) | | | | | | | |
|---|---|---|---|---|---|---|---|---|
| 0 - 7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8 - 15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ |
| 16 - 23 | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\-j\end{bmatrix}$ | $\frac{1}{2}\begin{bmatrix}1\\j\\-j\\-1\end{bmatrix}$ | $\frac{1}{2}\begin{bmatrix}1\\-1\\1\\1\end{bmatrix}$ | $\frac{1}{2}\begin{bmatrix}1\\-1\\j\\-j\end{bmatrix}$ | $\frac{1}{2}\begin{bmatrix}1\\-1\\-1\\-1\end{bmatrix}$ | $\frac{1}{2}\begin{bmatrix}1\\-1\\-j\\j\end{bmatrix}$ |

(continued)

| TPMI index | W (ordered from left to right in increasing order of TPMI index) | | | | | | | |
|---|---|---|---|---|---|---|---|---|
| 24 - 27 | $\frac{1}{2}\begin{bmatrix}1\\-j\\1\\-j\end{bmatrix}$ | $\frac{1}{2}\begin{bmatrix}1\\-j\\j\\-1\end{bmatrix}$ | $\frac{1}{2}\begin{bmatrix}1\\-j\\-1\\j\end{bmatrix}$ | $\frac{1}{2}\begin{bmatrix}1\\-j\\-j\\1\end{bmatrix}$ | - | - | - | - |

In the NR system, the network device may configure at most one SRS resource set to the terminal for the non-codebook based uplink transmission, which may be implemented by configuring one SRS resource set as non-codebook. For the non-codebook based uplink transmission, the terminal sends a capability to transmit a maximum number of SRS resources simultaneously to the network device. The resource set may be configured with at most four SRS resources, and each SRS resource includes one SRS port. The network device may indicate one or more SRS resources to the terminal via the SRI for determination of the precoding information of the PUSCH. The number of SRS resources corresponding to the SRI is the number of PUSCH transport streams. When the network device only configures one SRS resource for non-codebook based uplink transmission to the terminal, the DCI format 0_1 does not include the SRI, and the terminal determines the precoding information of the PUSCH based on the configured SRS resource.
SRI indication tables for the non-codebook based transmission and the codebook based transmission specified in a protocol are shown below.

Table 4

| Bit field mapped to index | SRI(s), $N_{SRS}$ = 2 | Bit field mapped to index | SRI(s), $N_{SRS}$ = 3 | Bit field mapped to index | SRI(s), $N_{SRS}$ = 4 |
|---|---|---|---|---|---|
| 0 | 0 | 0 | 0 | 0 | 0 |
| 1 | 1 | 1 | 1 | 1 | 1 |
| | | 2 | 2 | 2 | 2 |
| | | 3 | reserved | 3 | 3 |

Table 5

| Bit field mapped to index | SRI(s), $N_{SRS}$ = 2 | Bit field mapped to index | SRI(s), $N_{SRS}$ = 3 | Bit field mapped to index | SRI(s), $N_{SRS}$ = 4 |
|---|---|---|---|---|---|
| 0 | 0 | 0 | 0 | 0 | 0 |
| 1 | 1 | 1 | 1 | 1 | 1 |
| 2 | 0, 1 | 2 | 2 | 2 | 2 |
| 3 | reserved | 3 | 0, 1 | 3 | 3 |
| | | 4 | 0, 2 | 4 | 0, 1 |
| | | 5 | 1, 2 | 5 | 0, 2 |
| | | 6 - 7 | reserved | 6 | 0, 3 |
| | | | | 7 | 1, 2 |
| | | | | 8 | 1, 3 |
| | | | | 9 | 2, 3 |
| | | | | 10 - 15 | reserved |

Table 6

| Bit field mapped to index | SRI(s), $N_{SRS}$ = 2 | Bit field mapped to index | SRI(s), $N_{SRS}$ = 3 | Bit field mapped to index | SRI(s), $N_{SRS}$ = 4 |
|---|---|---|---|---|---|
| 0 | 0 | 0 | 0 | 0 | 0 |
| 1 | 1 | 1 | 1 | 1 | 1 |
| 2 | 0, 1 | 2 | 2 | 2 | 2 |
| 3 | reserved | 3 | 0, 1 | 3 | 3 |
| | | 4 | 0, 2 | 4 | 0, 1 |
| | | 5 | 1, 2 | 5 | 0, 2 |
| | | 6 | 0, 1, 2 | 6 | 0, 3 |
| | | 7 | reserved | 7 | 1.2 |
| | | | | 8 | 1, 3 |
| | | | | 9 | 2, 3 |
| | | | | 10 | 0, 1, 2 |
| | | | | 11 | 0, 1, 3 |
| | | | | 12 | 0, 2, 3 |
| | | | | 13 | 1, 2, 3 |
| | | | | 14 - 15 | reserved |

Table 7

| Bit field mapped to index | SRI(s), $N_{SRS}$ = 2 | Bit field mapped to index | SRI(s), $N_{SRS}$ = 3 | Bit field mapped to index | SRI(s), $N_{SRS}$ = 4 |
|---|---|---|---|---|---|
| 0 | 0 | 0 | 0 | 0 | 0 |
| 1 | 1 | 1 | 1 | 1 | 1 |
| 2 | 0, 1 | 2 | 2 | 2 | 2 |
| 3 | reserved | 3 | 0, 1 | 3 | 3 |
| | | 4 | 0, 2 | 4 | 0, 1 |
| | | 5 | 1, 2 | 5 | 0, 2 |
| | | 6 | 0, 1, 2 | 6 | 0, 3 |
| | | 7 | reserved | 7 | 1, 2 |
| | | | | 8 | 1, 3 |
| | | | | 9 | 2, 3 |
| | | | | 10 | 0, 1, 2 |
| | | | | 11 | 0, 1, 3 |
| | | | | 12 | 0, 2, 3 |
| | | | | 13 | 1, 2, 3 |
| | | | | 14 | 0, 1, 2, 3 |
| | | | | 15 | reserved |

Table 8

| Bit field mapped to index | $N_{SRS} = 2$ SRI(s), |
|---|---|
| 0 | 0 |
| 1 | 1 |

Table 9

| Bit field mapped to index | SRI(s), $N_{SRS} = 3$ |
|---|---|
| 0 | 0 |
| 1 | 1 |
| 2 | 2 |
| 3 | Reserved |

Table 10

| Bit field mapped to index | SRI(s), $N_{SRS} = 4$ |
|---|---|
| 0 | 0 |
| 1 | 1 |
| 2 | 2 |
| 3 | 3 |

Regardless of whether the above communication methods for the PUSCH is based on codebook or based on non-codebook, PUSCH enhancement may be performed based on Multi-TRP. At present, the main solution of sending the PUSCH controlled based on the single DCI is realized by using two independent SRI fields to correspond to SRIs of different TRPs respectively in DCI0_1/0_2, to control the sending of the PUSCH to the different TRPs. For the PUSCH transmission enhancement of multi-TRP based on the single DCI, dynamic switching between the single TRP and the multi-TRP needs to be supported, so as to better adapt to transmission scenarios and actual channel conditions. For example, when the PUSCH is sent based on the multi-TRP, the network device may quickly schedule current sending of the PUSCH to use single-TRP transmission via a signaling based on an actual channel and a service condition. Further, in the case of the single-TRP transmission, it is required to support flexible indication of the TRP to which the PUSCH is sent.

FIG. 2 is a flowchart illustrating a communication method for a PUSCH according to an example embodiment. As illustrated in FIG. 2, the method includes step S11.

At step S11, first indication information is sent. The first indication information is configured to indicate a PUSCH transmission mode associated with a TRP, and the PUSCH transmission mode associated with the TRP includes a terminal independently sending the PUSCH to a single TRP or cooperatively sending the PUSCH to multiple TRPs.

In the embodiment of the disclosure, the network device may instruct the terminal to dynamically switch between the single TRP and the multiple TRPs based on the first indication information. For example, the first indication information is configured to indicate the single TRP, and the terminal may independently send the PUSCH to the single TRP. For another example, the first indication information is configured to indicate the multiple TRPs, and the terminal may cooperatively send the PUSCH to the multiple TRPs.

FIG. 3 is a flowchart illustrating a communication method for a PUSCH according to an example embodiment. As illustrated in FIG. 3, the method includes steps S21 and S22.

At step S21, first indication information is received. The first indication information is configured to indicate a PUSCH transmission mode associated with a TRP, and the PUSCH transmission mode associated with the TRP includes a terminal independently sending the PUSCH to a single TRP or cooperatively sending the PUSCH to multiple TRPs.

At step S22, the PUSCH is independently sent to the single TRP or cooperatively sent to the multiple TRPs based on the first indication information.

In the embodiment of the disclosure, the terminal receives the first indication information sent by the network device, and independently sends the PUSCH to the single TRP or cooperatively send the PUSCH to the multiple TRPs based on the first indication information. Dynamic switching between the multiple TRPs and the single TRP can be implemented and the PUSCH may be sent in the present disclosure.

In the communication method for a PUSCH provided in the embodiments of the disclosure, the first indication information may be configured to indicate a correspondence between a transmission occasion of sending the PUSCH and a TRP direction to which the terminal is oriented.

Transmission occasions are associated with different TRP directions based on different TRP transmission directions. In an example, if the first indication information indicates a single-TRP transmission state and TRP 1 (first SRS resource set) is specified, all the transmission occasions are targeted to the TRP 1. In another example, if the first indication information indicates a multi-TRP transmission state and corresponds to TRP 1 & TRP 2, a first group of PUSCH transmission occasions is targeted to a first TRP (the first SRS resource set), and a second group of PUSCH transmission occasions is targeted to a second TRP (second SRS resource set).

In the communication method for a PUSCH provided in the embodiments of the disclosure, the first indication information is carried on a DCI signaling, and is indicated by an SRI indication field in the DCI signaling.

The DCI signaling may include a plurality of SRI indication fields, and the plurality of SRI indication fields at least include a first SRI indication field and a second SRI indication field. The first SRI indication field is configured to indicate a first SRS resource set for scheduling the PUSCH. The second SRI indication field is configured to indicate a second SRS resource set for scheduling the PUSCH. It can be understood that the first SRI indication field corresponds to a first TRP direction, and the second SRI indication field corresponds to a second TRP direction.

In the communication method for a PUSCH provided in the embodiments of the present disclosure, an activation state of the TRP may be indicated based on a reserved codepoint. The reserved codepoint may be configured for the first SRI field or the second SRI field.

In an embodiment, the DCI includes a plurality of SRI indication fields, and the SRI indication field includes a redefined reserved codepoint or a newly added reserved codepoint.

Further, in the embodiment of the disclosure, the redefined reserved codepoint and the newly added reserved codepoint included in the SRI indication field may be obtained by redefining or newly adding a reserved codepoint based on the codepoint situation indicated in an SRI table corresponding to a previous protocol version after an update of a protocol version. For example, for the redefined reserved codepoint and the newly added reserved codepoint included in the SRI indication field in R17 may be obtained by redefining or newly adding a reserved codepoint based on the codepoint included in the SRI indication field in R16.

If the DCI includes a plurality of SRI indication fields, and the SRI indication field does not include a codepoint for indicating a reserved codepoint, a reserved codepoint may be redefined or newly added in the SRI indication field.

For example, for the case that there are many SRIs in the SRI table in an existing protocol and there is no corresponding reserved codepoint in the SRI table, a reserved codepoint may be redefined or newly added in the SRI indication field. For example, a reserved codepoint may be redefined or added for at least one of the following situations.

- Situation where for the codebook based transmission, there is no reserved codepoint when $N_{SRS}$ is 2 or 4.
- Situation where for the non-codebook based transmission, there is no reserved codepoint when Lmax is 1, $N_{SRS}$ is 2 or 4.
- Situation where there is no SRI field, dynamic switching cannot be supported for the codebook based transmission and the non-codebook based transmission, i.e., when $N_{SRS}$ is 1.

According to the communication method for a PUSCH provided in the embodiments of the present disclosure, classification may be performed on a codepoint corresponding to each SRI indication field in multiple SRI indication fields included in the DCI, for example, the codepoint is classified to a codepoint indicating a valid SRI or a configured reserved codepoint. If the SRI indication field indicates an SRI of the reserved codepoint, an SRS resource set corresponding to the SRI of the reserved codepoint is in an inactivated state, and the PUSCH is not sent in a direction to the TRP. If the SRI indication field indicates the codepoint of the valid SRI, the PUSCH is sent to the TRP in a direction of an SRS resource indicated in an SRS resource set corresponding to the codepoint of the valid SRI. That is, when the SRI indicates the reserved codepoint, it indicates that all SRS resources in the SRS resource set received corresponding to the TRP are not selected by the network device, which is equivalent to that no PUSCH is sent in the TRP direction.

According to the communication method for a PUSCH provided in the embodiments of the disclosure, a codepoint is added by extending an existing SRI indication field to implement dynamic switching between the single TRP and the multiple TRPs.

In an embodiment, in the codebook based and non-codebook based PUSCH transmission processes, an indication of the TRP direction may be realized based on the first SRI indication field and the second SRI indication field.

In an embodiment, the indication of the TRP direction may be realized based on the SRI table consistent with the existing SRI table.

In an example, for a case where no reserved codepoint exists in the existing SRI table, bits may be added in the SRI indication field to indicate the SRS resource set.

In an example, for the case where the PUSCH is sent based on non-codebook transmission, and the number of layers in the TRP direction to which the PUSCH is sent is 1, the following Table 11 may be used.

Table 11

| Bit field mapped to index | SRI(s), $N_{SRS}$ = 2 | Bit field mapped to index | SRI(s), $N_{SRS}$ = 3 | Bit field mapped to index | SRI(s), $N_{SRS}$ = 4 |
|---|---|---|---|---|---|
| 0 | 0 | 0 | 0 | 0 | 0 |
| 1 | 1 | 1 | 1 | 1 | 1 |
| 2 | reserved | 2 | 2 | 2 | 2 |
| 3 | reserved | 3 | reserved | 3 | 3 |
| | | | | 4 | reserved |
| | | | | 5 | reserved |
| | | | | 6 | reserved |
| | | | | 7 | reserved |

In another example, for the case where the PUSCH is sent based on codebook transmission and the number of SRS resources is 2, the following table 12 may be used.

Table 12

| Bit field mapped to index | SRI(s), $N_{SRS}$ = 2 |
|---|---|
| 0 | 0 |
| 1 | 1 |
| 2 | reserved |
| 3 | reserved |

When the Table 11 and the Table 12 are applied, if the first indication information sent by the network device indicates the reserved codepoint, it can be determined that the sending to the TRP is configured by the network device to be inactivated. That is, the PUSCH is not sent in the direction to the TRP.

Further, in the communication method for a PUSCH provided in the embodiments of the disclosure, the SRI indication field includes indication information configured to indicate to reorder mapping relationships between a plurality of cooperative TRPs to which the PUSCH is sent and the SRI fields. The TRP transmission direction to which the terminal is oriented is associated with the corresponding SRS resource set, so as to support flipping of TRP scheduling.

In the communication method for a PUSCH provided in the embodiments of the disclosure, for the non-codebook based PUSCH transmission, an SRS resource combination for sending the PUSCH in the first SRS resource set corresponding to the PUSCH may be indicated by the first SRI indication field, and indication information of the number of layers sent to a first TRP direction of the PUSCH is included. The second SRI indication field is configured to indicate an SRS resource combination for sending the PUSCH in the second SRS resource set corresponding to the PUSCH. The second SRI indication field does not include the indication information of the number of layers sent to a TRP direction of sending the PUSCH.

In an embodiment of the disclosure, a valid SRI codepoint set included in the second SRS resource set is a subset of a valid SRI codepoint set included in the first SRS resource set, and includes a redefined and/or newly added codepoint, and is configured to indicate different PUSCH transmission states of cooperative TRPs.

In an example, when the SRI field for indicating the second SRS resource set does not include the indication information of the number of layers, the number of layers is indicated by the SRI field corresponding to the first SRS resource set, as shown in Table 13 below. Table 13 may be equivalent to Table 14 and Table 15. For the case where the number of layers is equal to 1, the second SRI indication is shown in the Table 14. For the case where the number of layers is equal to 2, the second SRI indication is shown in the Table 15.

Table 13

| Bit field mapped to index | SRI(s), $N_{SRS}$ = 2 | Bit field mapped to index | SRI(s), $N_{SRS}$ = 3 | Bit field mapped to index | SRI(s), $N_{SRS}$ = 4 |
|---|---|---|---|---|---|
| 0 | 0 | 0 | 0 | 0 | 0 |
| 1 | 1 | 1 | 1 | 1 | 1 |
| 2 | 0, 1 | 2 | 2 | 2 | 2 |
| 3 | reserved | 3 | 0, 1 | 3 | 3 |
| | | 4 | 0, 2 | 4 | 0, 1 |
| | | 5 | 1, 2 | 5 | 0, 2 |
| | | 6-7 | reserved | 6 | 0, 3 |
| | | | | 7 | 1, 2 |
| | | | | 8 | 1, 3 |
| | | | | 9 | 2, 3 |
| | | | | 10 - 15 | reserved |

Table 14

| Bit field mapped to index | SRI(s), $N_{SRS}$ = 2 | Bit field mapped to index | SRI(s), $N_{SRS}$ = 3 | Bit field mapped to index | SRI(s), $N_{SRS}$ = 4 |
|---|---|---|---|---|---|
| 0 | 0 | 0 | 0 | 0 | 0 |
| 1 | 1 | 1 | 1 | 1 | 1 |
| 2 | reserved | 2 | 2 | 2 | 2 |
| | | 3 | reserved | 3 | 3 |
| | | | | 4 | reserved |
| | | | | | |
| | | | | | |

Table 15

| Bit field mapped to index | SRI(s), $N_{SRS}$ = 2 | Bit field mapped to index | SRI(s), $N_{SRS}$ = 3 | Bit field mapped to index | SRI(s), $N_{SRS}$ = 4 |
|---|---|---|---|---|---|
| 0 | 0, 1 | 0 | 0, 1 | 0 | 0, 1 |
| 1 | reserved | 1 | 0, 2 | 1 | 0, 2 |
| | | 2 | 1, 2 | 2 | 0, 3 |
| | | 3 | reserved | 3 | 1, 2 |
| | | | | 4 | 1, 3 |
| | | | | 5 | 2, 3 |
| | | | | 6 | reserved |
| | | | | | |
| | | | | | |
| | | | | | |

(continued)

| Bit field mapped to index | SRI(s), $N_{SRS}$ = 2 | Bit field mapped to index | SRI(s), $N_{SRS}$ = 3 | Bit field mapped to index | SRI(s), $N_{SRS}$ = 4 |
|---|---|---|---|---|---|
|  |  |  |  |  |  |

Referring to the Table 14 and the Table 15, in an embodiment of the disclosure, the second SRI indication field may indicate usage of the second SRS resource set by redefining or adding the number of bits, and activation state indication of the single TRP may be supported.

In an embodiment of the disclosure, the valid SRI codepoint set included in the second SRS resource set is a subset of the valid SRI codepoint set in the first SRS resource set, and the number of bits of the DCI may be saved relative to the Table 13.

In the communication method for a PUSCH provided in the embodiments of the disclosure, the Table 13 above may also be equivalent to Table 16 and Table 17. For the case where the number of data layers is equal to 1, the second SRI indication is shown in the Table 16. For the case where the number of data layers is equal to 2, the second SRI indication is shown in the Table 17.

Table 16

| Bit field mapped to index | SRI(s), $N_{SRS}$ = 2 | Bit field mapped to index | SRI(s), $N_{SRS}$ = 3 | Bit field mapped to index | SRI(s), $N_{SRS}$ = 4 |
|---|---|---|---|---|---|
| 0 | 0 | 0 | 0 | 0 | 0 |
| 1 | 1 | 1 | 1 | 1 | 1 |
| 2 | reserved | 2 | 2 | 2 | 2 |
|  | ... | 3 | reserved | 3 | 3 |
|  | ... |  | ... | 3 | reserved |
| 6 | Reserved TRP1 | 6 | Reserved TRP1 | 6 | Reserved TRP1 |
| 7 | Reserved TRP2 | 7 | Reserved TRP2 | 7 | Reserved TRP2 |

Table 17

| Bit field mapped to index | SRI(s), $N_{SRS}$ = 2 | Bit field mapped to index | SRI(s), $N_{SRS}$ = 3 | Bit field mapped to index | SRI(s), $N_{SRS}$ = 4 |
|---|---|---|---|---|---|
| 0 | 0, 1 | 0 | 0, 1 | 0 | 0, 1 |
| 1 | reserved | 1 | 0, 2 | 1 | 0, 2 |
|  | ... | 2 | 1, 2 | 2 | 0, 3 |
|  |  | 3 | reserved | 3 | 1, 2 |
|  | ... |  | .... | 4 | 1, 3 |
|  |  |  |  | 5 | 2, 3 |
| 6 | Reserved TRP1 | 6 | Reserved TRP1 | 6 | Reserved TRP1 |
| 7 | Reserved TRP2 | 7 | Reserved TRP2 | 7 | Reserved TRP2 |
|  |  |  |  |  |  |
|  |  |  |  |  |  |
|  |  |  |  |  |  |

In the Table 16 and Table 17, last two codepoints can be used to indicate which TRP is in the active state, the second SRI field indicates which SRS resource set corresponds to the first SRI field, and then the first SRI is used to indicate the selection of a specific SRI resource, so as to determine the selection of the SRI transmission parameter in the single-TRP transmission state.

In the communication method for a PUSCH provided in the embodiments of the present disclosure, for the codebook based PUSCH transmission or the non-codebook based PUSCH transmission, if one or more SRS resource sets for sending the PUSCH to one or more cooperative TRPs include only one SRS resource, that is, only one SRS resource is in the SRS resource set, the SRI field may be extended. The PUSCH transmission state in the TRP direction corresponding to the SRS resource set is indicated by the indication information of the SRI field. That is, when the SRS resource set only includes one SRS resource, the SRI field defines 1 bit or 2 bits to indicate activation of the TRP.

In an embodiment, the indication information of the SRI field is configured to jointly indicate activation states of the corresponding multiple SRS resource sets. Different SRS resource sets correspond to different TRP directions.

Further, the SRI indication field includes the indication information configured to indicate to reorder the mapping relationships between multiple cooperative TRP to which the PUSCH is sent and the SRI fields. The TRP transmission direction to which the terminal is oriented is associated with the corresponding SRS resource set.

In an example, the first SRS resource set corresponds to the first TRP direction. If the codepoint of the second SRI indication field indicates a single-TRP case of "TRP 2", the SRI actually corresponding to the first SRI indication field actually corresponds to the second SRS resource set, that is, the second TRP direction. Therefore, the reordering of the TRPs is realized, that is, flipping of the TRPs is realized.

In an implementation, in response to codebook based transmission of the PUSCH, indication information of the PUSCH transmission states for different cooperative TRPs indicated by the SRI field corresponds to indication information of TPMI transmission states. The indication information of the PUSCH transmission states is configured to indicate transmission states of different TRPs corresponding to different TPMI indication fields.

In an example, assuming that in the codebook-based PUSCH transmission, the TPMI field still has two indication fields corresponding to TRP 1 & TRP 2, respectively. The TPMI and RI may be indicated by the TPMI field.

In a first case, the two TPMI fields both indicate the TPMI and the RI, the TPMI fields do not have enough reserved codepoints to indicate TRP activation information. The SRI field may be redefined, and the TRP activation information is indicated by supplementing the SRI field, similar to Table 18 or Table 19. For example, in the Table 18, each SRS resource set only has an SRI field definition (2 bits) of one SRS resource. In the Table 19, each SRS resource set only has an SRI field definition (2 bits) of one SRS resource.

Table 18

| Bit field mapped to index | SRI(s), $N_{SRS} = 1$ |
|---|---|
| 0 | TRP1 |
| 1 | TRP2 |
| 2 | TRP1 & TRP2 |
| 3 | TRP2& TRP1 |

Referring to the Table 18, valid information of the TPMI field is correspondingly selected based on the SRI field indication information. For example, if the SRI indicates 0, then the TPMI & RI corresponding to the TMPI 1 is selected. If SRI = 2, it indicates that current transmission is the multi-TRP transmission, and the first SRI field corresponds to the SRS resource set configured for the TRP 1. If SRI = 3, it indicates that current transmission is the multi-TRP transmission, and the first SRI field corresponds to the SRS resource set configured for the TRP 2, that is, the flipping of TRP scheduling is realized.

Table 19

| Bit field mapped to index | SRI(s), $N_{SRS} = 1$ |
|---|---|
| 0 | TRP1 |
| 1 | TRP2 |
| 2 | m-TRP |
| 3 | Reserved |

The flipping of TRP scheduling is not supported in the Table 19.

In a second case, if the TPMI corresponding to the second SRS resource set only indicates the TPMI and does not indicate RI, the TPMI field does not have enough reserved codepoints to indicate the TRP activation information. The SRI field may be redefined, and the TRP activation information may be indicated by supplementing the SRI field, similar to Table 20. In the Table 20, each SRS resource set only has an SRI field definition (1 bit) of one SRS resource.

Table 20

| Bit field mapped to index | SRI(s), $N_{SRS} = 1$ |
| --- | --- |
| 0 | TRP1 |
| 1 | TRP2 |

Referring to Table 20, the valid information of the TPMI field is correspondingly selected based on the SRI field indication information. For example, if SRI indicates 0, then the TPMI & RI corresponding to the TMPI 1 is selected. The Table 20 does not support the flipping of TRP scheduling. In the embodiments of the disclosure, the flipping of TRP scheduling may also be supported. For example, the Table 18 is used, and the function of flipping the TRP mapping may also be implemented.

It may be understood that the first indication information involved in the embodiments of the present disclosure implements a TRP indication process, which may be separately applied to a terminal, may also be separately applied to a network device, or may also be applied to a process of sending the PUSCH implemented by interaction between the terminal and the network device.

It should be noted that those skilled in the art may understand that various implementations/embodiments involved in the embodiments of the disclosure may be used in conjunction with the aforementioned embodiments, and may also be used independently. Whether the embodiments are used alone or in cooperation with the aforementioned embodiments, the implementation principle is similar. In the embodiments of the disclosure, some embodiments are described in combination with each other. Those skilled in the art may understand that the embodiments of the disclosure are not limited to the illustrative descriptions.

Based on the same concept, the embodiments of the disclosure further provide a communication apparatus for a PUSCH.

It could be understood that the communication apparatus for a PUSCH provided in the embodiments of the disclosure contains hardware structures and/or software modules that execute various functions in order to implement the above functions. In combination with the units and algorithm steps of the examples described in embodiments of the disclosure, the embodiments of the disclosure may be implemented in the form of hardware or a combination of hardware and computer software. Whether a function is executed by hardware or computer software driven by hardware depends on a particular application and design constraint of the technical solution. Those skilled in the art may adopt different methods to implement the described functions for each specific application, but it should not be considered that the implementation goes beyond the scope of the technical solutions of embodiments of the disclosure.

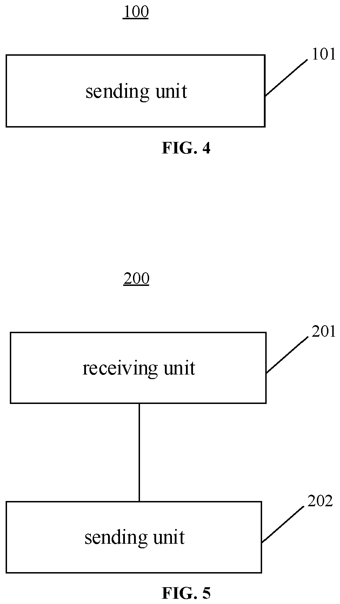

FIG. 4 is a block diagram illustrating a communication apparatus for a PUSCH according to an example embodiment. Referring to FIG. 4, the communication apparatus 100 for a PUSCH includes a sending unit 101. The communication apparatus 100 for a PUSCH may be applied to a network device.

The sending unit 101 is configured to send first indication information. The first indication information is configured to instruct a terminal to independently send the PUSCH to a single TRP or cooperatively send the PUSCH to multiple TRPs.

In an implementation, the first indication information be configured to indicate a correspondence between a transmission occasion of the PUSCH and a TRP direction to which the terminal is oriented.

In an implementation, the first indication information is carried on a DCI signaling, and is indicated by an SRI indication field in the DCI signaling.

In an implementation, the DCI includes a plurality of SRI indication fields, and the SRI indication field includes a redefined reserved codepoint or a newly added reserved codepoint.

In an implementation, the DCI includes a plurality of SRI indication fields, and codepoints corresponding to each SRI indication field include a codepoint indicating a valid SRI and a configured reserved codepoint.

If the SRI indication field indicates an SRI of the reserved codepoint, an SRS resource set corresponding to the SRI of the reserved codepoint is in an inactivated state, and the PUSCH is not sent in a direction to the TRP.

If the SRI indication field indicates the codepoint of the valid SRI, the PUSCH to the TRP is sent in a direction of an SRS resource indicated in an SRS resource set corresponding to the codepoint of the valid SRI.

In an implementation, in response to non-codebook based transmission of the PUSCH, and the SRI indication field at least including a first SRI indication field and a second SRI indication field,

the first SRI indication field is configured to indicate an SRS resource combination for sending the PUSCH in a first SRS resource set corresponding to the PUSCH, and includes indication information of a number of layers sent to a first TRP direction of the PUSCH;

the second SRI indication field is configured to indicate an SRS resource combination for sending the PUSCH in a second SRS resource set corresponding to the PUSCH. The second SRI indication field does not include the indication information of the number of layers sent to a TRP direction of sending the PUSCH.

In an implementation, a valid SRI codepoint set included in the second SRS resource set is a subset of a valid SRI codepoint set included in the first SRS resource set, and includes a redefined and/or newly added codepoint, and is configured to indicate different PUSCH transmission states of cooperative TRPs.

In an implementation, in response to one or more SRS resource sets for sending the PUSCH to one or more cooperative TRPs including only one SRS resource, indication information of the SRI field is configured to indicate a PUSCH transmission state in a TRP direction corresponding to an SRS resource set.

In an embodiment, the indication information of the SRI field is configured to jointly indicate activation states of a plurality of SRS resource sets. Different SRS resource sets correspond to different TRP directions.

In an embodiment, the SRI indication field includes indication information configured to indicate to reorder mapping relationships between a plurality of cooperative TRPs to which the PUSCH is sent and SRI fields, a TRP transmission direction to which the terminal is oriented is associated with the corresponding SRS resource set.

In an implementation, in response to codebook-based transmission of the PUSCH, indication information of the PUSCH transmission states for different cooperative TRPs indicated by the SRI field corresponds to indication information of TPMI transmission states. The indication information of the PUSCH transmission states is configured to indicate transmission states of different TRPs corresponding to different TPMI indication fields.

FIG. 5 is a block diagram illustrating a communication apparatus for a PUSCH according to an example embodiment. Referring to FIG. 5, the apparatus 200 includes a receiving unit 201 and a sending unit 202. The communication apparatus 200 for a PUSCH may be applied to a terminal.

The receiving unit 201 is configured to receive first indication information. The first indication information is configured to instruct the terminal to independently send the PUSCH to a single TRP or cooperatively send the PUSCH to multiple TRPs. The sending unit 202 is configured to independently send the PUSCH to the single TRP or cooperatively send the PUSCH to the multiple TRPs based on the first indication information.

In an implementation, the first indication information be configured to indicate a correspondence between a transmission occasion of the PUSCH and a TRP direction to which the terminal is oriented.

In an implementation, the first indication information is carried on a DCI signaling, and is indicated by an SRI indication field in the DCI signaling.

In an implementation, the DCI includes a plurality of SRI indication fields, and the SRI indication field includes a redefined reserved codepoint or a newly added reserved codepoint.

In an implementation, the DCI includes a plurality of SRI indication fields, and codepoints corresponding to each SRI indication field include a codepoint indicating a valid SRI and a configured reserved codepoint.

If the SRI indication field indicates an SRI of the reserved codepoint, an SRS resource set corresponding to the SRI of the reserved codepoint is in an inactivated state, and the PUSCH is not sent in a direction to the TRP.

If the SRI indication field indicates the codepoint of the valid SRI, the PUSCH is sent to the TRP in a direction of an SRS resource indicated in an SRS resource set corresponding to the codepoint of the valid SRI.

In an implementation, in response to non-codebook based transmission of the PUSCH, and the SRI indication field at least including a first SRI indication field and a second SRI indication field,

the first SRI indication field is configured to indicate an SRS resource combination for sending the PUSCH in a first SRS resource set corresponding to the PUSCH, and includes indication information indicating a number of data layers sent to a first TRP direction of the PUSCH;

the second SRI indication field is configured to indicate an SRS resource combination for sending the PUSCH in a second SRS resource set corresponding to the PUSCH. The second SRI indication field does not include the indication information of the number of layers sent to a TRP direction of sending the PUSCH.

In an implementation, a valid SRI codepoint set included in the second SRS resource set is a subset of a valid SRI codepoint set included in the first SRS resource set, includes a redefined and/or newly added codepoint, and is configured to indicate different PUSCH transmission states of cooperative TRPs.

In an implementation, in response to one or more SRS resource sets for sending the PUSCH to one or more cooperative TRPs including only one SRS resource, indication information of the SRI field is configured to indicate a PUSCH transmission state in a TRP direction corresponding to an SRS resource set.

In an implementation, the indication information of the SRI field is configured to jointly indicate activation states of a plurality of SRS resource sets. The different SRS resource sets correspond to different TRP directions.

In an implementation, the SRI indication field includes indication information configured to indicate to reorder mapping relationships between a plurality of cooperative TRPs to which the PUSCH is sent and SRI fields. A TRP transmission direction to which the terminal is oriented is associated with the corresponding SRS resource set.

In an implementation, in response to codebook-based transmission of the PUSCH, indication information of the PUSCH transmission states for different cooperative TRPs indicated by the SRI field corresponds to indication information of TPMI transmission states. The indication information of the PUSCH transmission states is configured to indicate transmission states of different TRPs corresponding to different TPMI indication fields.

With regard to the apparatus in the above embodiments, the specific way in which each module performs the operation has been described in detail in the embodiments of the method and will not be elaborated here.

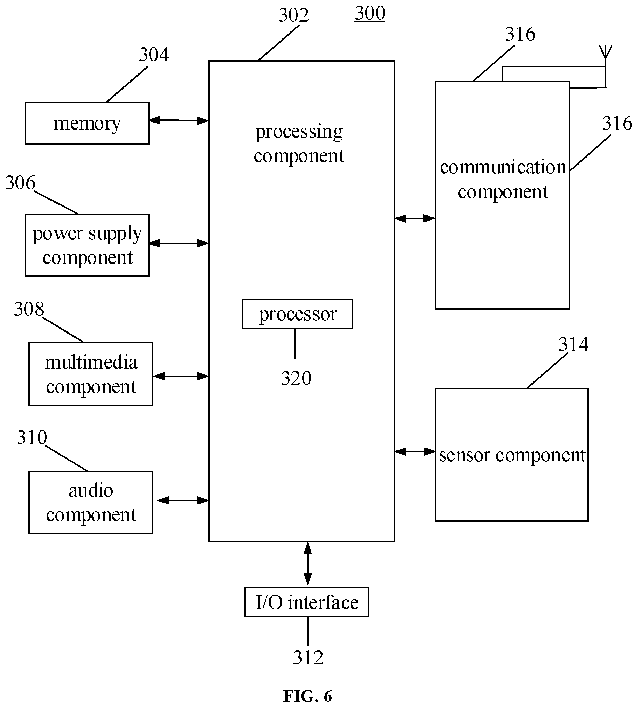

FIG. 6 is a block diagram illustrating a communication apparatus for a PUSCH according to an example embodiment. For example, the apparatus 300 may be a mobile phone, a computer, a digital broadcasting terminal, a messaging device, a game console, a tablet device, a medical equipment, a fitness equipment, a personal digital assistant, etc.

Referring to Fig. 6, the apparatus 300 may include one or more components: a processing component 302, a memory 304, a power supply component 306, a multimedia component 308, an audio component 310, an input/output (I/O) interface 312, a sensor component 314, and a communication component 316.

The processing component 302 generally controls the whole operation of the apparatus 300, such as the operations related to display, phone call, data communication, camera operation and recording operation. The processing component 302 may include one or more processors 320 to perform instructions, to complete all or part of steps of the above method. In addition, the processing component 302 may include one or more modules for the convenience of interaction between the processing component 302 and other components. For example, the processing component 302 may include a multimedia module for the convenience of interaction between the multimedia component 308 and the processing component 302.

The memory 304 is configured to store all types of data to support the operation of the apparatus 300. Examples of the data include the instructions of any applications or methods operated on the apparatus 300, contact data, phone book data, messages, pictures, videos, etc. The memory 304 may be implemented by any type of volatile or non-volatile storage devices or their combination, such as a stationary random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 306 may provide power supply for all components of the apparatus 300. The power supply component 306 may include power supply management system, one or more power supplies, and other units related to generating, managing and distributing power for the apparatus 300.

The multimedia component 308 includes an output interface screen provided between the apparatus 300 and the user. In some embodiments, a screen may include a liquid crystal display (LCD) and a touch panel (TP). When the screen includes a touch panel, the screen may be implemented as a touch screen to receive input signals from the user. The touch panel includes one or more touch sensors to sense touching, sliding and gestures on the touch panel. The touch sensor may not only sense the boundary of touch or slide action, but also detect the duration and pressure related to the touching or sliding operation. In some embodiments, the multimedia component 308 includes a front camera and/or a rear camera. When the apparatus 300 is in operation mode, such as shooting mode or video mode, the front camera or the rear camera may receive the external multimedia data. Each front camera and rear camera may be a fixed optical lens system or an optical lens system with focal length and optical zoom capacity.

The audio component 310 is configured as an output and/or input signal. For example, the audio component 310 includes a microphone (MIC). When the apparatus 300 is in operation mode, such as call mode, record mode, and speech recognition mode, the microphone is configured to receive the external audio signals. The audio signals received may be further stored in the memory 304 or sent via the communication component 316. In some embodiments, the audio component 310 further includes a speaker configured to output an audio signal.

The I/O interface 312 provides an interface for the processing component 302 and the peripheral interface module, and the peripheral interface module may be a keyboard, a click wheel, a button, etc. The buttons may include but not limited to a home button, a volume button, a start button and a lock button.

The sensor component 314 includes one or more sensors, configured to provide various aspects of status assessment for the apparatus 300. For example, the sensor component 314 may detect the on/off state of the apparatus 300 and the relative positioning of the component. For example, the component is a display and a keypad of the apparatus 300. The sensor component 314 may further detect the location change of the apparatus 300 or one component of the apparatus 300, the presence or absence of contact between the user and the apparatus 300, the orientation or acceleration/deceleration of the apparatus 300, and the temperature change of the apparatus 300. The sensor component 314 may include a proximity sensor, which is configured to detect the existence of the objects nearby without any physical contact. The sensor component 314 may further include a light sensor such as CMOS or CCD image sensor, which is configured to use in imaging applications. In some embodiments, the sensor component 314 may further include an acceleration transducer, a gyroscope sensor, a magnetic sensor, a pressure sensor or a temperature sensor.

The communication component 316 is configured for the convenience of wire or wireless communication between the apparatus 300 and other devices. The apparatus 300 may access wireless networks based on communication standard, such as Wi-Fi, 2G or 3G, or their combination. In an exemplary embodiment, the communication component 316 receives broadcast signals or broadcast-related information from an external broadcast management system via a broadcast channel. In an exemplary embodiment, the communication component 316 further includes a near field communication (NFC) module to facilitate short-range communication. For example, an NFC module may be implemented based on radio frequency identification (RFID) technology, infrared data association (IRDA) technology, ultra-wideband (UWB) technology, Bluetooth (BT) technology and other technologies.

In an exemplary embodiment, the apparatus 300 may be implemented by one or more application specific integrated circuits(ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In an example embodiment, a non-temporary computer readable storage medium is further provided which includes instructions, such as the memory 304 including instructions. The instructions may be executed by the processor 320 of the apparatus 300 to complete the above methods. For example, the non-transitory computer readable storage medium may be a ROM, a random access memory (RAM), a CD-ROM, a magnetic tape, a floppy disk, an optical data storage device, etc.

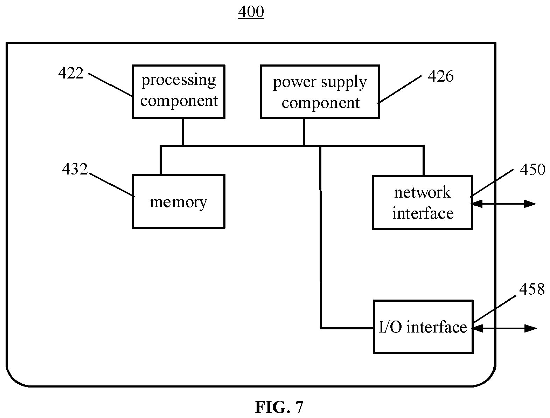

FIG. 7 is a block diagram illustrating a communication apparatus for a PUSCH according to an example embodiment. For example, the apparatus 400 may be provided as a network device. Referring to FIG. 7, the apparatus 400 includes a processing component 422, which further include one or more processors, and memory resources represented by the memory 432, which are configured to store instructions executed by the processing component 422, for example, an application. The applications stored in the memory 432 may include one or more modules each of which corresponds to a set of instructions. In addition, the processing component 422 is configured to execute instructions, to execute the above method.

The apparatus 400 may further include one power supply component 426 configured to execute power management of the apparatus 400, and one wired or wireless network interface 450 configured to connect the apparatus 400 to a network, and one input/output(I/O) interface 458. The apparatus 400 may operate an operating system stored in the memory 432, for example, Windows Server™, Mac OS X™, Unix™, Linux™, FreeBSD™.

In an example embodiment, a non-temporary computer readable storage medium is further provided which includes instructions, such as the memory 432 including instructions. The instructions may be executed by the processing component 422 of the apparatus 400 to complete the above methods. For example, the non-transitory computer readable storage medium may be a ROM, a random access memory (RAM), a CD-ROM, a magnetic tape, a floppy disk, an optical data storage device, etc.

It may be further understood that "a plurality of" in the present disclosure means two or above, which is similar to other quantifiers. "and/or", describes the relationship of the association objects, indicating that there may exist three relationships, for example, A and/or B, may represent: any of existing A only, existing both A and B, or existing B only. The character "/" generally means the contextual object is a kind of "or" relationship. The singular forms "a", "the" and "said are also intended to include plural forms, unless the context clearly indicates otherwise.

It should be further understood that, although the terms "first", "second", "third", etc. may be configured to describe various information, such information shall not be limited to these terms. These terms are only used to distinguish the same type of information, rather than indicate a particular order or importance degree. In fact, "first", "second" and other similar descriptions may be used interchangeably. For example, subject to the scope of this present disclosure, first information may also be referred to as second information, and similarly, and second information may also be referred to as first information.

It may be further understood that, even though operations are described in the drawings in a particular order, it should not be understood as requiring that such operations be performed in the particular order shown or in sequential order, or that all illustrated operations be performed to obtain desirable results. In certain circumstances, multitasking and parallel processing may be advantageous.

After considering the specification and practicing the disclosure herein, those skilled in the art will easily think of other implementations. The present application is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of the present disclosure are given by the appended claims.

It should be understood that the present disclosure is not limited to the precise structure described above and shown in the drawings, and various modifications and changes may be made without departing from its scope. The scope of the present application is only limited by the appended claims. The scope of the present application is only limited by the appended claims.

**Claims**

1. A communication method for a physical uplink shared channel (PUSCH), applied to a network device, comprising: sending first indication information, wherein the first indication information is configured to indicate a PUSCH transmission mode associated with a transmission reception point (TRP), and the PUSCH transmission mode associated with the TRP comprises a terminal independently sending the PUSCH to a single TRP or cooperatively sending the PUSCH to multiple TRPs.

2. The method of claim 1, wherein the first indication information is configured to indicate a correspondence between a transmission occasion for sending the PUSCH and a TRP direction to which the terminal is oriented.

3. The method of claim 1, wherein the first indication information is carried on a downlink control information (DCI) signaling, and is indicated by a sounding reference signal resource indicator (SRI) indication field in the DCI signaling.

4. The method of claim 3, wherein the DCI signaling comprises a plurality of SRI indication fields, and the SRI indication field comprises a redefined reserved codepoint or a newly added reserved codepoint.

5. The method of claim 3 or 4, wherein the DCI signaling comprises a plurality of SRI indication fields, and codepoints corresponding to each SRI indication field comprise a codepoint indicating a valid SRI and a configured reserved codepoint;

   wherein, a sounding reference signal (SRS) resource set corresponding to an SRI of the reserved codepoint is in an inactivated state and the PUSCH is not sent in a direction corresponding to the TRP, in response to the SRI indication field indicating the SRI of the reserved codepoint;
   the PUSCH is sent to the TRP in a direction of an SRS resource indicated in an SRS resource set corresponding to the codepoint of the valid SRI, in response to the SRI indication field indicating the codepoint of the valid SRI.

6. The method of claim 4, wherein, in response to non-codebook based transmission of the PUSCH, and the SRI indication field at least comprising a first SRI indication field and a second SRI indication field;

   the first SRI indication field is configured to indicate an SRS resource combination for sending the PUSCH in a first SRS resource set corresponding to the PUSCH, and comprises indication information of a number of layers sent to a first TRP direction of the PUSCH;
   the second SRI indication field is configured to indicate an SRS resource combination for sending the PUSCH in a second SRS resource set corresponding to the PUSCH, and the second SRI indication field does not comprise the indication information of the number of layers sent to a TRP direction of sending the PUSCH.

7. The method of claim 6, wherein a valid SRI codepoint set included in the second SRS resource set is a subset of a valid SRI codepoint set included in the first SRS resource set, comprises a redefined and/or newly added codepoint, and is configured to indicate different PUSCH transmission states of cooperative TRPs.

8. The method of claim 3, wherein, in response to one or more SRS resource sets for sending the PUSCH to one or more cooperative TRPs comprising only one SRS resource, indication information of the SRI field is configured to indicate a PUSCH transmission state in a TRP direction corresponding to an SRS resource set.

9. The method of claim 8, wherein the indication information of the SRI field is configured to jointly indicate activation states of a plurality of SRS resource sets; wherein different SRS resource sets correspond to different TRP directions.

10. The method of any of claims 3 to 9, wherein the SRI indication field comprises indication information configured to indicate to reorder mapping relationships between a plurality of cooperative TRPs to which the PUSCH is sent and SRI fields, wherein a TRP transmission direction to which the terminal is oriented is associated with the corresponding SRS resource set.

11. The method of any of claims 8 to 10, wherein, in response to codebook-based transmission of the PUSCH, indication information of PUSCH transmission states for different cooperative TRPs indicated by the SRI field corresponds to indication information of transmission precoding matrix indicator (TPMI) transmission states, wherein the indication information of the PUSCH transmission states is configured to indicate transmission states of different TRPs corresponding to different TPMI indication fields.

12. A communication method for a physical uplink shared channel (PUSCH), applied to a terminal, comprising:

receiving first indication information, wherein the first indication information is configured to indicate a PUSCH transmission mode associated with a transmission reception point (TRP), and the PUSCH transmission mode associated with the TRP comprises a terminal independently sending the PUSCH to a single TRP or cooperatively sending the PUSCH to multiple TRPs; and
independently sending the PUSCH to the single TRP or cooperatively sending the PUSCH to the multiple TRPs based on the first indication information.

13. The method of claim 12, wherein the first indication information is configured to indicate a correspondence between a transmission occasion for sending the PUSCH and a TRP direction to which the terminal is oriented.

14. The method of claim 12, wherein the first indication information is carried on a downlink control information (DCI) signaling, and is indicated by a sounding reference signal resource indicator (SRI) indication field in the DCI signaling.

15. The method of claim 14, wherein the DCI signaling comprises a plurality of SRI indication fields, and the SRI indication field comprises a redefined reserved codepoint or a newly added reserved codepoint.

16. The method of claim 14 or 15, wherein the DCI signaling comprises a plurality of SRI indication fields, and codepoints corresponding to each SRI indication field comprise a codepoint indicating a valid SRI and a configured reserved codepoint;

wherein a sounding reference signal (SRS) resource set corresponding to an SRI of the reserved codepoint is in an inactivated state and the PUSCH is not sent in a direction to the TRP, in response to the SRI indication field indicating the SRI of the reserved codepoint;
the PUSCH is sent to the TRP in a direction of an SRS resource indicated in an SRS resource set corresponding to the codepoint of the valid SRI, in response to the SRI indication field indicating the codepoint of the valid SRI.

17. The method of claim 15, wherein, in response to non-codebook based transmission of the PUSCH, and the SRI indication field at least comprising a first SRI indication field and a second SRI indication field;

the first SRI indication field is configured to indicate an SRS resource combination for the sending the PUSCH in a first SRS resource set corresponding to the PUSCH, and comprises indication information indicating a number of layers sent to a first TRP direction of the PUSCH;
the second SRI indication field is configured to indicate an SRS resource combination for sending the PUSCH in a second SRS resource set corresponding to the PUSCH, and the second SRI indication field does not comprise the indication information of the number of layers sent to a TRP direction of sending the PUSCH.

18. The method of claim 17, wherein a valid SRI codepoint set included in the second SRS resource set is a subset of a valid SRI codepoint set included in the first SRS resource set, comprises a redefined and/or newly added codepoint, and is configured to indicate different PUSCH transmission states of cooperative TRPs.

19. The method of claim 14, wherein, in response to one or more SRS resource sets for sending the PUSCH to one or more cooperative TRPs comprising only one SRS resource, indication information of the SRI field is configured to indicate a PUSCH transmission state in a TRP direction corresponding to an SRS resource set.

20. The method of claim 19, wherein the indication information of the SRI field is configured to jointly indicate activation states of a plurality of SRS resource sets; wherein different SRS resource sets correspond to different TRP directions.

21. The method of any of claims 14 to 20, wherein the SRI indication field comprises indication information configured to indicate to reorder mapping relationships between a plurality of cooperative TRPs to which the PUSCH is sent and SRI fields, wherein a TRP transmission direction to which the terminal is oriented is associated with the corresponding SRS resource set.

22. The method of any of claims 19 to 21, wherein, in response to codebook-based transmission of the PUSCH, indication information of PUSCH transmission states for different cooperative TRPs indicated by the SRI field corresponds to indication information of transmission precoding matrix indicator (TPMI) transmission states; wherein the indication information of the PUSCH transmission states is configured to indicate transmission states of different TRPs corresponding to different TPMI indication fields.

23. A communication apparatus for a physical uplink shared channel (PUSCH), comprising:
a sending unit, configured to send first indication information, wherein the first indication information is configured to instruct the terminal to independently send the PUSCH to a single transmission reception point (TRP) or cooperatively send the PUSCH to multiple TRPs.

24. A communication apparatus for a physical uplink shared channel (PUSCH), comprising:

a receiving unit, configured to receive first indication information, wherein the first indication information is configured to instruct the terminal to independently send the PUSCH to a single transmission reception point (TRP) or cooperatively send the PUSCH to multiple TRPs;
a sending unit, configured to independently send the PUSCH to the single TRP or cooperatively send the PUSCH to the multiple TRPs based on the first indication information.

25. A communication apparatus for a physical uplink shared channel (PUSCH), comprising:

a processor;
a memory configured to store instructions executable by the processor;
wherein, the processor is configured to execute the communication method for a PUSCH of any one of claims 1 to 11 or the communication method for a PUSCH of any one of claims 12 to 22.

26. A storage medium, wherein instructions are stored in the storage medium, and when the instructions in the storage medium are executed by a processor of a network device, the network device is caused to execute the communication method for a PUSCH of any one of claims 1 to 11, or when the instructions in the storage medium are executed by a processor of a terminal, the terminal is caused to execute the communication method for a PUSCH of any one of claims 12 to 22.

**FIG. 1**

| |
|---|
| sending first indication information, in which, the first indication information is configured to indicate a PUSCH transmission mode associated with a TRP, and the PUSCH transmission mode associated with the TRP includes terminal independently sending the PUSCH to a single TRP or cooperatively sending the PUSCH to multiple TRPs |

S11

**FIG. 2**

| |
|---|
| receiving first indication information, in which, the first indication information is configured to indicate a PUSCH transmission mode associated with a TRP, and the PUSCH transmission mode associated with the TRP includes a terminal independently sending the PUSCH to a single TRP or cooperatively sending the PUSCH to multiple TRPs |

S21

S22

| |
|---|
| independently sending the PUSCH to the single TRP or cooperatively sending the PUSCH to the multiple TRPs |

**FIG. 3**

100

sending unit 101

**FIG. 4**

200

receiving unit 201

sending unit 202

**FIG. 5**

**FIG. 6**

<u>400</u>

FIG. 7

**EP 4 319 422 A1**

## INTERNATIONAL SEARCH REPORT

| | International application No. |
|---|---|
| | **PCT/CN2021/084754** |

| **A.** | **CLASSIFICATION OF SUBJECT MATTER** |
|---|---|

H04W 72/12(2009.01)i

According to International Patent Classification (IPC) or to both national classification and IPC

| **B.** | **FIELDS SEARCHED** |
|---|---|

Minimum documentation searched (classification system followed by classification symbols)

H04W; H04Q

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 单, 多, TRP, PUSCH, 字段, 指示, 比特, 模式, 切换, SRI, single, multi+, s?TRP, m? TRP, field, bit, mode, switch+

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | ERICSSON. "On PDCCH, PUCCH and PUSCH Enhancements" *3GPP TSG-RAN WG1 Meeting #104e R1-2101654*, 12 February 2021 (2021-02-12), section 2.2 | 1-26 |
| A | AT&T. "Views on Beam Management Enhancements for Multi-TRP" *3GPP TSG RAN WG1 #102-e R1-2005955*, 28 August 2020 (2020-08-28), entire document | 1-26 |
| A | AT&T. "Views on Beam Management Enhancements for Multi-TRP" *3GPP TSG RAN WG1 #103-e R1-2008309*, 13 November 2020 (2020-11-13), entire document | 1-26 |
| A | CN 112292823 A (QUALCOMM INC.) 29 January 2021 (2021-01-29) entire document | 1-26 |
| A | WO 2021029738 A1 (LG ELECTRONICS INC.) 18 February 2021 (2021-02-18) entire document | 1-26 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 December 2021** | **06 January 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**28**

**INTERNATIONAL SEARCH REPORT**
Information on patent family members

International application No.

**PCT/CN2021/084754**

| Patent document cited in search report | | | Publication date (day/month/year) | Patent family member(s) | | | Publication date (day/month/year) |
|---|---|---|---|---|---|---|---|
| CN | 112292823 | A | 29 January 2021 | US | 2019342035 | A1 | 07 November 2019 |
| | | | | WO | 2019212628 | A1 | 07 November 2019 |
| | | | | EP | 3788734 | A1 | 10 March 2021 |
| WO | 2021029738 | A1 | 18 February 2021 | | None | | |

Form PCT/ISA/210 (patent family annex) (January 2015)